Europäisches Patentamt

European Patent Office

Office européen des brevets

(11) Veröffentlichungsnummer: **0 017 037**
**A1**

## (12) EUROPÄISCHE PATENTANMELDUNG

(21) Anmeldenummer: 80101283.2

(22) Anmeldetag: 12.03.80

(51) Int. Cl.³: **H 01 Q 3/26**
**H 04 B 7/08**

(30) Priorität: 27.03.79 DE 2912087

(43) Veröffentlichungstag der Anmeldung:
15.10.80 Patentblatt 80/21

(84) Benannte Vertragsstaaten:
AT BE CH DE FR GB IT NL SE

(71) Anmelder: SIEMENS AKTIENGESELLSCHAFT Berlin
und München
Postfach 22 02 61
D-8000 München 22(DE)

(72) Erfinder: Küchler, Heinz, Dipl.-Ing.
Murnauer Strasse 256
D-8000 München 70(DE)

(72) Erfinder: Müller, Friedrich, Dipl.-Ing.
Maxhofstrasse 74
D-8000 München 71(DE)

(72) Erfinder: Tauscheck, Eberhard, Dipl.-Ing.
Irschenhauser Strasse 4
D-8000 München 70(DE)

(72) Erfinder: Wieser, Kurt, Dipl.-Ing.
Kirchenstrasse 35
D-8034 Germering(DE)

(54) Anordnung aus wenigstens zwei über einen Leistungsteiler gekoppelten Antennen mit Richt- und/oder Rundstrahlcharakteristik.

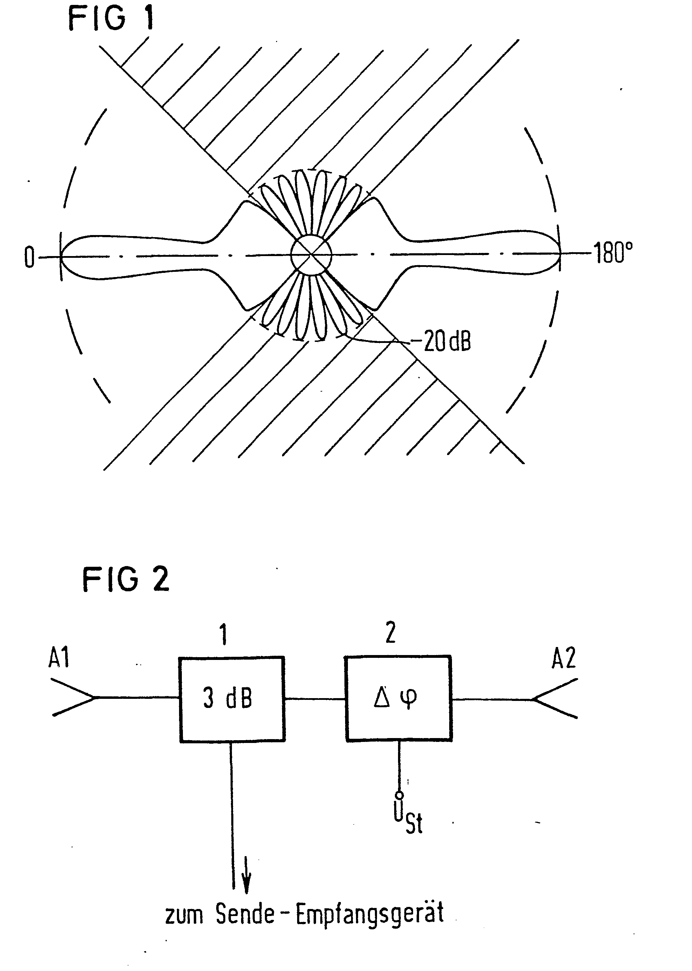

(57) Die Erfindung bezieht sich auf eine Anordnung aus wenigstens zwei über einen Leistungsteiler (1) gekoppelten Antennen (A1, A2) mit Richt- und/oder Rundstrahlcharakteristik, insbesondere für ein bewegliches Funksystem mit zwei räumlich Rücken an Rücken zueinander angeordneten Antennen. Bei einer solchen Anordnung soll eine von Nullstellen freie Strahlungscharakteristik erzeugt werden. Die Erfindung sieht hierzu im Speiseweg einer Antenne (A2) einen derart gesteuerten Phasenschieber (2) vor, daß eine interferenzfreie Strahlungscharakteristik entsteht (Figur 2).

EP 0 017 037 A1

FIG 2

zum Sende - Empfangsgerät

0017037

SIEMENS AKTIENGESELLSCHAFT      Unser Zeichen
Berlin und München              VPA

79 P 6 5 5 3 EUR

Anordnung aus wenigstens zwei über einen Leistungsteiler gekoppelten Antennen mit Richt- und/oder Rundstrahlcharakteristik

Die Erfindung bezieht sich auf eine Anordnung aus wenigstens zwei über einen Leistungsteiler gekoppelten
Antennen mit Richt- und/oder Rundstrahlcharakteristik,
insbesondere für ein bewegliches Funksystem mit zwei
räumlich Rücken an Rücken zueinander angordneten
Antennen.

Bei Antennenanordnungen aus Rundstrahlern und Richtstrahlern treten durch Interferenz Nullstellen in der
Strahlungscharakteristik auf. Eine dadurch bedingte
Unterbrechung der Nachrichtenverbindung läßt sich bei
nicht beweglichen Funksystemen durch Verwendung von
Phasennetzwerken mit fest einstellbaren Phasen beheben.
Damit wird für bestimmte Winkel des Antennendiagramms
eine dauerhafte örtliche Auffüllung eines Feldstärkeminimums erreicht.

Klu 1 Mai / 27.3.79

Der Erfindung liegt die Aufgabe zugrunde, für eine Anordnung aus wenigstens zwei Antennen mit Richt- und/oder Rundstrahlcharakteristik eine Lösung anzugeben für die Erzeugung einer von Nullstellen freien Strahlungscharakteristik. Insbesondere sollen Nullstellen aufgefüllt werden, die bei einer Anordnung von zwei räumlich Rücken an Rücken stehenden Antennen *) entstehen, von denen jede für sich Richt- und Rundstrahlwirkung besitzt und die gemeinsamen über einen Leistungsteiler gespeist werden.

Diese Aufgabe wird gemäß der Erfindung in der Weise gelöst, daß im Speiseweg einer Antenne ein derart elektronisch gesteuerter Phasenschieber eingefügt ist, daß eine interferenzfreie Strahlungscharakteristik entsteht. Diese besteht bei der Anordnung mit zwei räumlich Rücken an Rücken zueinander stehenden Antennen in vorteilhafter Weise aus einer interferenzfreien Rundstrahlcharakteristik mit zwei zusätzlichen einander gegegenüberliegenden Hauptkeulen.

Die Steuerung des Phasenschiebers erfolgt dabei in vorteilhafter Weise derart, daß der Phasenwinkel des Phasenschiebers um ca. 180° periodisch asynchron mit einer Frequenz größer der Signalbandbreite des Empfängers verstellt wird, daß der Phasenwinkel abhängig vom Empfangspegel so geregelt wird, daß immer ein maximaler Empfangspegel empfangen wird oder daß der Phasenwinkel durch ein externes Signal synchron z.B. zu einer Dreh- oder Linienbewegung gesteuert wird.

Bei einer Anordnung mit zwei Antennen mit je einer Hauptstrahlrichtung und einer Rundstsahlantennen ist in vorteilhafter Weise vorgesehen, daß der Phasenschieber in dem den beiden Antennen mit einer Hauptstrahlrichtung

*) bei einem beweglichen Funksystem

gemeinsamen Speiseweg vor dem Leistungsteiler oder im
Speiseweg der Rundstrahlantenne eingefügt ist. Die
Steuerung des Phasenschiebers erfolgt ebenfalls in der
vorstehend beschriebenen Weise.

Nachstehend wird die Erfindung anhand von in der
Zeichnung dargestellten Ausführungsbeispielen näher
erläutert.

Es zeigen
Fig. 1 das Strahlungsdiagramm von zwei räumlich Rücken
        an Rücken zueinander angeordneten Antennen,
Fig. 2 das Blockschaltbild der zugehörigen Antennenanordnung und
Fig. 3 eine weitere erfindungsgemäße Antennenanordnung
        im Blockschaltbild.

Das Strahlungsdiagramm nach Fig. 1 enthält zwei einander gegenüberliegende, d.h. um 180° zueinander gedrehte
Hauptkeulen. Symmetrisch dazu liegen in einem etwa
rechtwinkligen Kreisausschnitt, dessen Mittelachse um
90° zur Achse der Hauptkeulen gedreht ist, jeweils
mehrere Nebenkeulen (Nebenzipfel), die gegenüber den
Hauptkeulen eine Dämpfung von 20 dB aufweisen. Diese im
schraffierten Bereich liegenden Nebenkeulen entstehen
vorwiegend durch Interferenz der Strahlungen beider
Antennen. Die Strahlungscharakteristik weist zwischen
den einzelnen Nebenkeulen liegende Nullstellen auf, die
eine ungewünschte Unterbrechung der Nachrichtenverbindung
darstellen.

Fig. 2 zeigt eine Antennenanordnung mit zwei räumlich
Rücken an Rücken stehenden Antennen A1, A2, die gemeinsam über einen 3 dB-Koppler 1 gespeist werden. Im Speiseweg der einen Antenne, in der Figur die Antenne A2, ist ein elektronisch gesteuerter Phasenschieber 2 eingefügt, der von der Steuerspannung $U_{st}$ angesteuert wird. Mit diesem Phasenschieber werden die durch die Kombination der Antennen entstehenden Interferenzen im Funkfeld im Takte des Steuersignals des Phasenschiebers periodisch und räumlich so verschoben, daß am jeweiligen Empfangsort die Feldstärke im Takte der gesteuerten Phase zwischen gegenphasiger Auslöschung und gleichphasiger Addition schwankt. Ist die Frequenz der so entstandenen Amplitudenmodulation groß gegen die Signalbandbreite des Empfängers, entsteht keine durch Interferenzen bedingte Unterbrechung der Nachrichtenverbindung.

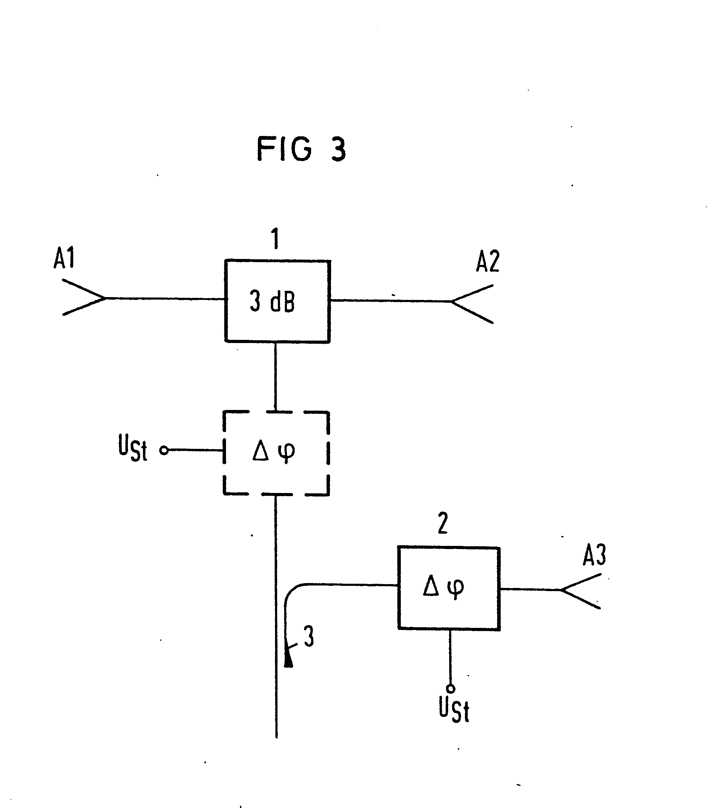

Fig. 3 zeigt eine Antennenanordnung aus zwei Antennen A1, A2 mit je einer Hauptstrahlrichtung, die räumlich Rücken an Rücken stehend angeordnet sind und gemeinsam über einen 3 dB-Koppler 1 gespeist werden. In der gemeinsamen Speiseleitung für die beiden Antennen A1, A2 ist vor dem 3 dB-Koppler eine weitere Auskoppelvorrichtung 3 vorgesehen, über die die Leistung für eine dritte Antenne A3 mit Rundstrahlcharakteristik ausgekoppelt wird. Bei dieser Antennenanordnung ist der elektronisch steuerbare Phasenschieber 2 im Speiseweg der dritten Antenne A3 eingefügt oder im gemeinsamen Speiseweg für die beiden Antennen A1, A2 mit Hauptstrahlcharakteristik vor dem 3 dB-Koppler 1 (strichlierte Darstellung).

5 Patentansprüche
3 Figuren

Patentansprüche

1. Anordnung aus wenigstens zwei über einen Leistungsteiler gekoppelten Antennen mit Richt- und/oder Rundstrahlcharakteristik, insbesondere für ein bewegliches Funksystem mit zwei räumlich Rücken an Rücken zueinan-der angeordneten Antennen, d a d u r c h  g e -k e n n z e i c h n e t , daß im Speiseweg einer Antenne ein derart gesteuerter Phasenschieber eingefügt ist, daß eine interferenzfreie Strahlungscharakteristik entsteht.

2. Anordnung nach Anspruch 1, d a d u r c h  g e -k e n n z e i c h n e t ,  daß der Phasenwinkel des Phasenschiebers um ca. 180$^o$ periodisch asynchron mit einer Frequenz größer der Signalbandbreite des Empfän-gers verstellt wird.

3. Anordnung nach Anspruch 1, d a d u r c h  g e -k e n n z e i c h n e t ,  daß der Phasenwinkel des Phasenschiebers abhängig vom Empfangspegel so geregelt wird, daß immer ein maximaler Empfangspegel empfangen wird.

4. Anordnung nach Anspruch 1, d a d u r c h  g e -k e n n z e i c h n e t ,  daß der Phasenwinkel des Phasenschiebers durch ein externes Signal synchron z.B. zu einer Dreh- oder Linienbewegung gesteuert wird.

5. Anordnung nach einem der vorhergehenden Ansprüche, mit zwei Antennen mit je einer Hauptstrahlrichtung und einer Rundstrahlantenne, d a d u r c h  g e k e n n -z e i c h n e t , daß der Phasenschieber in dem den beiden Antennen mit einer Hauptstrahlrichtung gemeinsamen Speiseweg vor dem Leistungsteiler oder im Speiseweg
der Rundstrahlantenne eingefügt ist.

1/2

**FIG 1**

0 ————————————————— 180°

−20 dB

**FIG 2**

zum Sende-Empfangsgerät

## FIG 3

| | Europäisches Patentamt | **EUROPÄISCHER RECHERCHENBERICHT** | Nummer der Anmeldung<br>EP 80 10 1283 |

## EINSCHLÄGIGE DOKUMENTE

| Kategorie | Kennzeichnung des Dokuments mit Angabe, soweit erforderlich, der maßgeblichen Teile | betrifft Anspruch | KLASSIFIKATION DER ANMELDUNG (Int.Cl. 3) |
|---|---|---|---|
| X | THE RADIO AND ELECTRONIC ENGINEER, Band 45, Nr. 7, Juli 1975, Seiten 357-367<br>London, G.B.<br>J.D. PARSONS et al.: "Diversity techniques for mobile radio reception"<br><br>   * Figur 9; Absatz 4.1.3: "Phase-sweeping method" *<br><br>-- | 1-3 | H 01 Q 3/26<br>H 04 B 7/08 |
| X | PROCEEDINGS OF THE I.R.E., Band 52, Nr. 4, April 1964, Seite 435<br>New York, U.S.A.<br>S. KAZEL: "Antenna Pattern Smoothing by Phase-Modulation"<br><br>   * Insgesamt *<br><br>-- | 1,3,5 | RECHERCHIERTE SACHGEBIETE (Int. Cl. 3)<br><br>H 01 Q   3/26-<br>          21/29<br>H 04 B   7/08<br>          7/10<br>          7/12 |
| X | IEEE TRANSACTIONS ON ANTENNAS AND PROPAGATION, Band AP-20, Nr. 4, Juli 1972, Seiten 463-469<br>New York, U.S.A.<br>O.G. VILLARD et al.: "A mode-averaging diversity combiner"<br><br>   * Insgesamt *<br><br>-- | 1-4 | |
| X | US - A - 3 357 018 (O.G. VILLARD)<br><br>   * Figur 1; Spalte 2, Zeile 62 - Spalte 8, Zeile 41 *<br><br>-- | 1-3 | KATEGORIE DER GENANNTEN DOKUMENTE<br><br>X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze |
| X | GB - A - 882 988 (STANDARD TELE-PHONES AND CABLES)<br><br>   * Insgesamt *<br><br>--<br>                     ./. | 1,3 | E: kollidierende Anmeldung<br>D: in der Anmeldung angeführtes Dokument<br>L: aus andern Gründen angeführtes Dokument<br>&: Mitglied der gleichen Patent-familie, übereinstimmendes Dokument |

X Der vorliegende Recherchenbericht wurde für alle Patentansprüche erstellt.

| Recherchenort | Abschlußdatum der Recherche | Prüfer |
|---|---|---|
| Den Haag | 03-07-1980 | CHATXDELAVARENE |

Nummer der Anmeldung

EP 80 10 1283

Europäisches
Patentamt

**EUROPÄISCHER RECHERCHENBERICHT**

-2-

| | **EINSCHLÄGIGE DOKUMENTE** | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| A | GB - A - 1 450 392 (THE PLESSEY COMPANY) <br> * Insgesamt * <br><br> -- | 1 | |
| A | GB - A - 1 508 680 (B.B.C.) <br> * Insgesamt * <br><br> -- | 1 | |
| A | GB - A - 1 389 817 (E.M.I.) <br> * Insgesamt * <br><br> ---- | 1 | **RECHERCHIERTE SACHGEBIETE (Int. Cl. 3)** |

EPA Form 1503.2   06.78